# EUROPEAN PATENT SPECIFICATION

(11) **EP 4 228 115 B1**
(45) Date of publication and mention of the grant of the patent: **07.08.2024**
(21) Application number: 22156347.1
(22) Date of filing: 11.02.2022
(51) Int. Cl.: H02J 3/00, H02J 3/38, H02J 3/14

(54) **INTELLIGENT ENERGY MANAGEMENT SYSTEM (IEMS) AND BALANCE PROFILE**
INTELLIGENTES ENERGIEMANAGEMENTSYSTEM (IEMS) UND GLEICHGEWICHTSPROFIL
SYSTÈME DE GESTION D'ÉNERGIE INTELLIGENT (IEMS) ET PROFIL D'ÉQUILIBRE

(43) Date of publication of application: 16.08.2023
(73) Proprietor: Kongsberg Maritime AS, 3616 Kongsberg (NO)
(72) Inventor: MATHIESEN, Eirik, 3601 Kongsberg (NO); KUMAR NAGALINGAM, Krishna, 3601 Kongsberg (NO)
(74) Representative: Bryn Aarflot AS

(56) References cited:
- EP-A1- 2 963 769
- EP-B1- 2 723 635
- WO-A1-2016/062565
- WO-A1-2021/078992

## Description

The present invention relates to an energy management system, especially for vessels at sea, and method for evaluating energy management in the system.

At present, the Energy Management System (EMS) onboard has become more complex, providing the option to configure the power plant in many different modes. It is of great importance to choose among the different producers to produce energy that meets the load demand with reduced losses and operation cost. The load profile is stochastic in nature and so a real-time optimization is required to minimize the operational cost and maximize the energy efficiency.

### Background:

Over the last decade, the regulations on emissions of pollutants have become strict. This has led to a new thinking across various sectors of maritime industries. Many transportation and shipping line companies are looking for an energy efficient system with improved fuel consumption with less carbon emissions. This shall be achieved by minimizing the utilization of diesel or gas driven engines or generators referred here as "gensets" and compensating them with renewable energy sources. There are various sources of renewable energies like batteries, photo-voltaic solar cells, wind, fuel cells etc., However, the challenge lies in integration of these energy sources with traditional ship power management system. Several reasons accounts for this such as installation spaces, ship operating regions, different voltage levels, different control systems and so on.

From the available various renewable energy sources, battery has gained stronger attention over the years among the research community. This is due its compactness, ease of installation and maintenance, quick charging characteristics and ability to meet instant power requirement. Moreover, the DC distribution has more advantages as compared to AC. Typical example, in a DC system there is no need for synchronization, reduction in cabling and elimination of bulky transformers. Additionally, in a DC system the reactive power circulation and harmonics are removed.

In conventional approaches on managing power generation, distribution will not be sufficient to operate the vessels with the complex power system beneficially. Therefore, a high-level supervisory system including, data acquisition and analysis, prediction of future operating needs, decision-making strategies and calculating optimal set-points becomes mandatory. The conventional power management system only ensures a power balance and reliability of ship power grid.

In recent years, there has been a great deal of attention given to digitalizing maritime industries for a greener, more sustainable form of operation. Due to this increase in awareness regarding environmental protection and ship safety issues, maritime authorities and governments around the world are making serious efforts to promote efficiency and safety of ship operation at sea. This has compelled the ship power systems to be kept as efficient as possible to assure high reliability for the vessel safety and for operators/passengers over a wide range of operation conditions at minimum cost and emissions. Examples of such systems are discussed in US9811099 and US10170912, as well as EP3865335 where measurements and registrations of available consumers such as thrusters, onboard equipment etc are combined with knowledge of generator or battery capacity etc. In addition, the dynamic positioning system may be used to compensate for planned power consumption as a way to reduce the load on the system. The known solutions also include motion prediction and compensating for predicted motions as discussed in WO2015/028636 and NO337927, as well as compensation for the dynamic operation windows of the generators in a system, as discussed in WO2015/028621.

Document WO 2016/062565 A1 discloses a marine vessel and its power supply using devices like generators and consumers.

It is an object of the present invention to introducesan intelligent energy management system referred here as "iEMS" that primarily focuses on optimal performance of the system over the time considering different objectives such as fuel-saving, emission reduction, maintenance cost, equipment health, minimum power utilization and safety.

The iEMS should be capable of managing the power/energy demand during various ship operations namely, Dynamic Positioning (DP), Maneuvering, Transit, Standby, Port, providing a decision-making capability helping in scheduling of power generation either from gensets or from other renewable energy sources based on the load levels. The torque and speed limit of gensets, dynamic weather conditions, nature of operations are used to determine the load set points for the producers. The knowledge-based learning aspect of iEMS also helps in better prediction of future load demand thereby reducing stress on producers and preventing power instability.

Another object of the present invention is to provide a power plant system on marine vessels that are robust in power management and optimal in energy balancing/storage looking at the equipment characteristics.

Yet another aspect is that, based on statistics, it is evident that a high percentage of ships are not operated efficiently owing to conventional thinking and operators with limited knowledge of systems. It is common practice for ship operators to have lot of redundancy in equipment's in the belief that it will prevent accidents. However, from the maritime authority reports it has apparent that most of the accidents are caused by human errors. For commercial and passenger sea-going vessels, risk analysis methods are used as decision support tools for improving maritime safety including protection of life, health, property, and marine environment. These also help to strike a balance between the different technical and operational constraints, including human element, maritime safety, protection of the marine environment and operations costs. But these risk analyses are often based on statistical data of past events, relying on recorded data of ship accidents. Improvements in maritime safety are dependent on accurate and comprehensive statistical data. Therefore, lack of precise information leads to inaccurate risk analyses.

On the other hand for dynamic positioning (DP) vessels as per IMO guidelines, a Failure Mode and Effects Analysis (FMEA) study is an important technical exercise used to determine the vessel's worst case failure and significant single point failures. Such FMEA reports are a requirement to obtain DP class 2 and 3 notations. In comparison to sea-going ships the DP ships safety elements are specific to DP activities. At present, the DP system incidents are recorded by reporting, investigation and closing out procedures. Owners and operators of DP vessels are encouraging to share lessons learned from DP incidents with the wider DP community, DP systems and equipment vendors are also encouraged likewise and to share information on unexpected faults, features and failures that are identified in operation.

In summary, all typical ship operations are complex in nature and are performed by following predefined operational and safety procedures laid by operators and flag authorities. The systems involved in the operations are interlinked with each other in several complicated patterns and is therefore difficult for operator to foresee the future effects of any actions taken as it is not possible to articulate the impact it may inherent to ship safety. It is therefore an object of the present invention to simplify the information presented for the operator or possibly for a machine learning algorithm trained to handle the situation automatically.

The objects of the present invention are achieved with a system for controlling a marine vessel as specified in the accompanying claims.

The present invention thus proposes a system with novel connector between the Operational Technology (OT) and Information Technology (IT) layer. The connector establishes a secure and reliable data exchange mechanism between the OT and IT layer. The decision computed by iEMS operating in the IT layer is then processed by a balance profile. Dynamic robustness is provided by the balance profile in terms of energy efficiency and redundancy margin index. An optimal decision is sent from the IT layer to the OT layer when the balance profile feature gives the best combined index, being based on the weighted scores calculated from the energy efficiency components and redundancy margin components. In this manner, an optimal power plant including setup of gensets and other renewable energy sources, thrusters, propellers can be autonomously configured in the real time by calculating the redundancy and/or load on the system and provide an index indicating the optimal operation of the system.

The EMS in OT layer has different submodes namely, boost mode, peakshaving mode, PTI/PTO mode etc., If the combined index from the balance profile falls within the acceptable limit, EMS automatically switches to the submode corresponding to the optimal power plant and the main vessel operation mode.

The solution according to the invention thus provides a a system and mechanism that benefits the ship performance both in terms of efficiency and safety (redundancy margin) such as providing recommendations for optimizing power generation, and distribution in a safe manner. The present invention also improves the decision-making ability of the iEMS in combination with the balance profile help to configure the ship power plant according to the operation performed autonomously in an ideal configuration to suit current and future weather conditions and operating location. The unique connector proposed helps to transfer the selected recommendations from balance profile in IT layer to the control system in the OT layer. This may eliminate the human involvement in the decision process, which enhances its effectiveness.

By using an online cost optimizer, the optimal load setpoints for various producers such as gensets, batteries, fuel cell etc., and the optimal power plant configuration/connections is used to improve overall fuel consumption and to determine the efficiency.

The iEMS according to the invention is designed to be autonomous in decision making capability and therefore the balance profile feature is introduced to process the results of cost optimizer before sending the suggested configurations to the control system. The balance profile computes a combined index between the energy efficiency and vessel redundancy margin. This may be performed according to a predetermined set of rules or be based on analysis of previous incidents and store events, possibly in combination with user feedback related to the situations.

The present invention will be discussed more in detail with reference to the accompanying drawings, illustrating the invention by way of examples.
- Figure 1: illustrates the iEMS and balance profile in a ship control system.
- Figure 2: illustrates schematically the balance profile.
- Figure 3: illustrates a flow chart of the iEMS and Balance profile in a DP operation.
- Figure 4: illustrates a flow chart of the iEMS and Balance profile in a DP operation involving transit, standby, harbor and maneuvering.

A dependable power source is essential during vessel operations. The main function of an energy management system (EMS) is to manage the power generation systems safely, reliably, and economically on various types of vessels. It does so by using failure-proof energy management strategies that provide high availability of power, under all working conditions.

A typical EMS does the following:
1. Monitors the producers and consumer and starts up or shuts down specific producers in response to alarm conditions.
2. Controls the load-sharing of the batteries via the converters.
3. Maintain sufficient power during changing electrical load conditions.
4. Performs quick load-reduction of heavy consumers if the producers are overloaded/shut down.
5. Does ramp control of heavy consumers, according to the number and type of producers connected.

One of the core capabilities of the EMS is the ability to prevent power outages, by avoiding electrical power overload scenarios. It also has the capability to quickly cope with sudden overload situations due to, unexpected loss or shutdown of electrical producers.

However, with stricter regulation on emissions the EMS needs to be intelligent in setup of the power plant according to the type of vessel mode. The iEMS including balance profile in level 4 of ANSI/ISA-95 model helps to perform real time optimization. Based on the vessel mode and operation, it determines the optimal power plant and calculates a combined index for the selection before transmitting it to EMS.

The ANSI/ISA-95 model consists of five levels, 0-4, with iEMS in level 4. Each level operates in different time frame depending the criticality of the operation performed. The iEMS greatly differs with regards to the control layer (OT layer) and operates in minutes /hours.

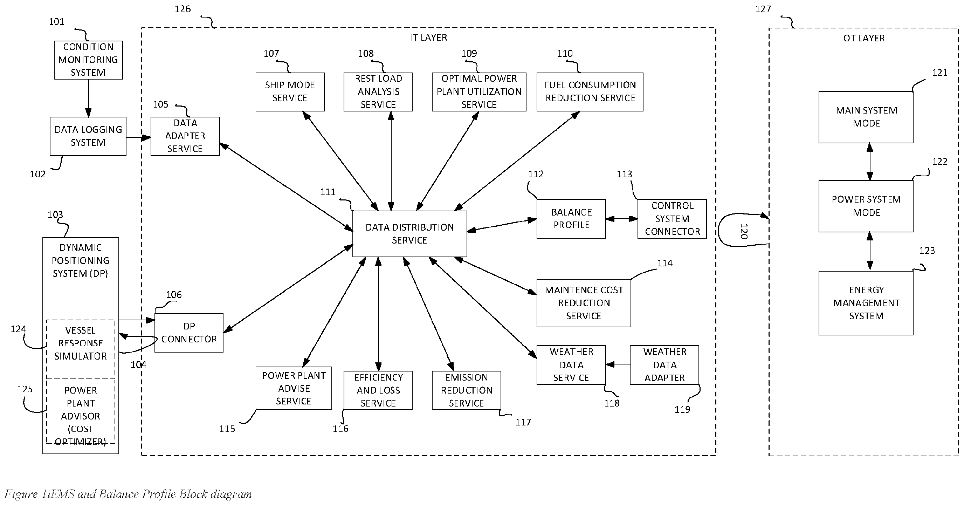

With regard to Figure 1 is shown an overview of different components comprising iEMS including the balance profile. The data logging system 102 collects and logs data from the control systems installed onboard. The logged data are then presented to the IT layer components through a data adapter service 105. The data are then populated and distributed from the 111 data distribution service. The 111 data distribution service bus publishes and subscribes information across the connected services.

The dynamic positioning system 103 hosts the power plant setup advisor component 125, that helps to determine the optimal power plant setup. The power plant setup advisor is an OS- application (MFC) that loops through all the possible desired setups and provides one setup to be used in each iteration. Each setup describes available gensets status, battery status, specific bus-tie breaker status and specific thruster connect status and can be an input to the worst-case failure (WSF) loop. The optimizer is run on each setup in order to calculate the optimal genset/battery setup and the cost for this power plant setup.

The power plant setups information is defined by configuration file or by a machine learning algorithm. The possible switchboard i.e., ring bus, open bus, closed bus, 2+1 split, 2-split or n split combinations and thruster configuration during a DP operation are defined in this configuration file. The legal DP class for each switchboard combination are included in the same configuration file. Based on the power requirements of each connected switchboard the potential contribution of each genset is directly given. However, for thruster it is complicated as it will contribute in at least two directions and typically in all three directions (surge, sway and yaw). In addition, thrusters are connected to different connected switchboards. Consequently, when disconnecting a thruster from a switchboard the power demands of other connected switchboard will increase. Each time a thruster is connected or disconnected the whole WSF loop must be re-run to find a new optimal genset setup.

The thruster demand is given in three axes, being Surge, Sway and Yaw. For the present weather condition and with the present settings the thruster demand is calculated by 103 DP. The output from 124 vessel response simulator is used if the analysis is run on changed settings in DP e.g., different heading or controller gain. The cost optimizer 125 gives long term advise for the power plant setup and is therefore necessary to smoothen the thrust demand so the thrust spikes do not influence on the result. A low pass filter is used to smoothen the thruster demand.

The required power ramp for each connect switchboard depends on the computed thrust ramp. Here the thrust ramp is determined from the standard deviation of the thrust demand. The deviation is computed recursively for surge, sway, and yaw separately. The calculated thrust standard deviations are multiplied with two to obtain the thrust ramps.

The purpose of vessel response simulator 124 is to generate the thrust demand and vessel response based on environmental disturbance (i.e., wind, current and waves). These environmental data are fetched from 118, 119 weather data service and adapter.

The solution of 125 optimization problem is sent to 106 DP connector in IT layer from 103 DP via a web interface 104. The interface 104 fetches a token from the IT layer and is then verified for every post from 103 DP. The traffic between 103 and 106 are encrypted using a self-assigned certificate.

In 126 different services are hosted in an IT layer that subscribes data and publish results to the data distribution service 111. The ship mode service 107 automatically detects the vessel main operation mode based on several signals likely, number of thrusters running, number of genset/battery running, shore power connection, vessel speed, water depth, vessel draft, vessel GPS position, vessel motions etc., 108 rest load analysis, determines the minimum rest load based on the vessel main operation mode information received from 107. The deviations from the baseline rest load are published back into 111 data distribution service. The power plant advise service 115 analyses the result from the 125 and determines the actions e.g., stopping/ starting of DG, thrusters, adjustments of kW/s etc., that needs to be forwarded to the control system via 113 control system connector.

The efficiency and loss service 116 calculate the power loss and the operating efficiency of the equipment's including producers and consumers. The service also computes the power losses and efficiency based on the suggested configuration received from 125. The optimal power plant utilization service 109 subscribes to results from 108, 115, 116 and 107. The optimal power plant setup, minimum rest load, power loss and efficiency and vessel operation mode are used in 109 to determine the ideal load reference that gives minimum fuel consumption and maximum efficiency. The weather data adapter 119 and weather data service 118 are used to fetch the weather forecast for the ship geographical location using an internet-based cloud service. This weather forecast information are published and subscribed by other services namely, 108, 106. Using the DP connector 106 the weather parameters are forwarded to the vessel response simulator 124.

In 110 the possible fuel consumption reduction based on the results from 109 is computed and forwarded to the balance profile 112. The fuel consumption reduction is used to calculate the achievable emission reduction in 117 and transferred to balance profile. The reduction in maintenance cost based on the reduction in running hours is computed in 114. The consolidated information from all the mentioned services in 126 are utilized in 112 to determine a combined index score based on the achievable energy efficiency and redundancy margin.

The control system connector 113 is used to send the combined index and the optimal power plant setup recommendations to the 127-control system layer via 120. The connector operates in the same mechanism as 104. The system 127 includes options for selection of main system mode 121 and power system mode 122. It also accommodates the EMS 123 which manages the power generation systems safely, reliably, and economically. The different main system modes 121 of a vessel are shore connection, harbour, maneuvering, transit slow, transit fast, transit full speed, transit max speed, DP propeller, DP thruster, anchor and silent operation etc., The ship mode service 107 in 126, determines automatically one of the main modes as mentioned earlier.

For each of the main modes, it is possible for 123 to configure the power plant in any of the power system mode. The power system mode depends on the configuration of main engine, hybrid shaft generator, auxiliary engines, energy storage unit, grid converters, shore connections etc., The combined index and optimal power plant configurations are processed in 123 to determine if a change in the power system mode is required to follow the suggestions. If the combined index from the balance profile falls within the acceptable limit, then the adaptation is performed automatically by EMS 123.

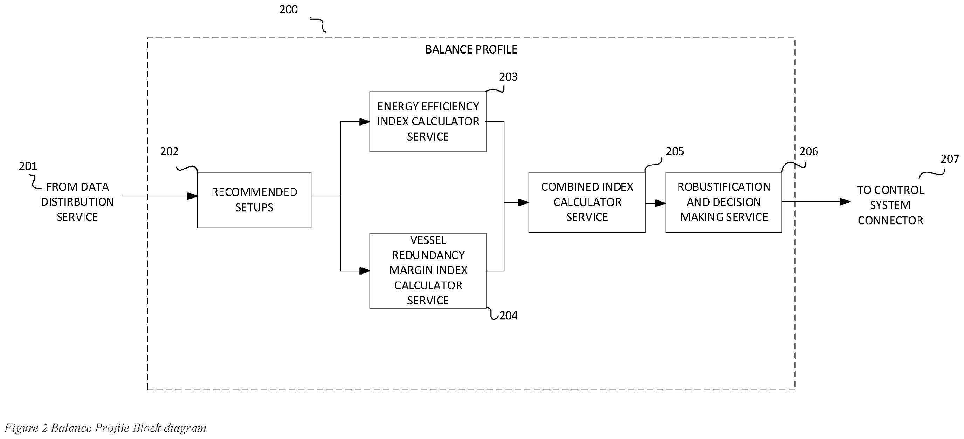

With regard to Figure 2, a block diagram of balance profile 200 inclusive of calculator service for combined index is shown. From the data distribution service 201 the suggested actions and results from other services of 126 are presented to 202. Based on the recommended setups a value of energy efficiency index 203 and vessel redundancy margin index 204 are calculated. In section, balance profile there are examples on how the energy efficiency index and vessel redundancy index are calculated for each individual actions.

This is illustrated in the tables below where table 1 illustrates the situation where an offshore vessel performs a DP operation in two split switchboard configurations with two gensets connected on each switchboard segments. All thrusters running in the two switchboard segments are running and enabled in DP system. The combined index computed for such operation from Balance profile is as shown below:

**Table 1 Present State Combined index value for DP operation**

| Present State | | | | | |
|---|---|---|---|---|---|
| Energy Efficiency components | Score | Redundancy Margin Components | Score | | |
| Number of Engines | 0.1 | Ship Position deviation | 0.45 | | |
| Number of Thrusters | 0.11 | Ship Motion | 0.09 | | |
| Fuel oil consumption/Emission | 0.11 | Ramp factor of producers and consumers | 0.29 | | |
| Rest Load | 0.2 | Heading deviation | 0.47 | | |
| Electrical Efficiency and Loss | 0.14 | Spinning Reserve | 0.16 | | |
| Power Available | 0.12 | Redundancy requirement | 0.03 | | |
| | | Operational Mode requirement | 0.06 | | |
| | | DP Consequence | 0.09 | | |
| Weighted Score | 0.23 | Weighted Score | 0.26 | Combined index | 0.1 |

The scores for the energy efficiency and redundancy margin are in this case the mean value of the individual scores for each element, but may be weighted differently, either automatically through analysis of previous situations or by an operator. The combined index is determined by setting a base and target value for energy efficiency and redundancy margin scores. Then mapping the two scores to a common index range and assign them dynamic weights for them according to operation mode. Finally, sum up the weighted score values for each score. The weights may be predetermined or dynamically adjusted based on machine learning algorithms and continuously samples information related to the performance of the system.

The situation in Table 1 results in a very low combined index, which is not optimal and should result in adjustments in the system, for example by increasing the number of producers, e.g. generators, in the system. This would increase the redundancy margin, but at the cost of the fuel consumption and emissions. The combined index would thus balance the different aspects of the system. The system may suggest a number of different adjustments of the system depending on the available equipment, and calculate the combined index for each of them, making the system or operator able to choose the best option based on the combined indexes.

A different situation is illustrated in table 2, where an offshore vessel is in Transit operation in single closed switchboard configurations with two main engines and two propellers running in diesel mechanic mode and one auxiliary engine connected on main switchboard. The vessel is cruising at 10 knots.

The combined index computed for such operation from Balance profile is as below.

**Table 2 Present State Combined index value for transit operation**

| Present State | | | | | |
|---|---|---|---|---|---|
| Energy Efficiency components | Score | Redundancy Margin Components | Score | | |
| Number of Engines | 0.1 | Ship Position deviation | 0.1 | | |
| Number of Thrusters | 0 | Ship Motion | 0.2 | | |
| Fuel oil consumption/Em ission | 0.11 | Ramp factor of producers and consumers | 0.29 | | |
| Rest Load | 0.5 | Heading deviation | 0.1 | | |
| Electrical Efficiency and Loss | 0.14 | Spinning Reserve | 0.16 | | |
| Power Available | 0.12 | Redundancy requirement | 0.03 | | |
| Main Engine Operation Mode | 0.1 | Operational Mode requirement | 0.06 | | |
| Combinator Mode for propeller | 0.15 | Ship drifting speed | 0.25 | | |
| | | Ship drifting direction | 0.25 | | |
| | | Distance to shallow water | 0.09 | | |
| Weighted Score | 0.125 | Weighted Score | 0.095 | Combined index | 0.044 |

Again, the system would suggest different solutions based on the available resources in the system and calculate the combined index for the different configurations, making it possible to choose the solution giving the optimal value of the combined index, which in the example would be the highest value.

More in detail the scores are computed using multiple parameters as mentioned in the Table 1 for DP and Table 2 for transit operation. Each parameter has its own weighted score depending on the vessel operation mode. The weighted score ranges from 0 to 1. For 204 the score 0 indicates very high redundancy margin and score 1 indicates very low redundancy margin. For 203 the score 0 indicates inefficient system and 1 indicates optimal system. These scores are then combined to produce a unified score in 205. In the combined index, a base value and target value are defined for energy efficiency and redundancy margin. The base and target value are adjusted dynamically according to the vessel operation mode. This combined index is then verified against a limit defined in 206 before a decision on forwarding to control system connector is made. The health status of services in 126 and the combined index value have to be within an acceptable limit to pass the validation.

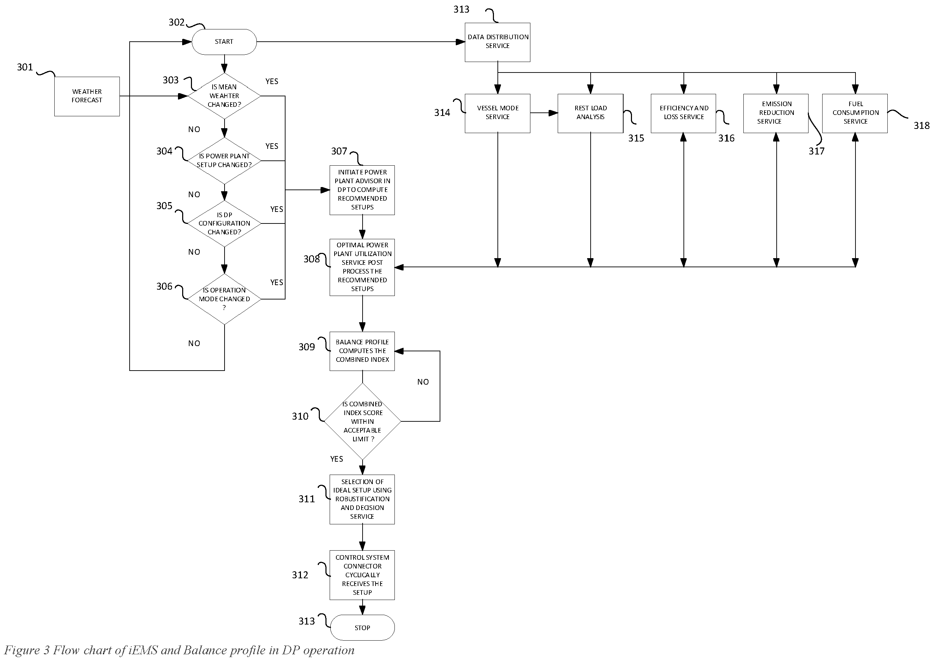

With regard to Figure 3, a flow diagram of an illustrative process of iEMS and balance profile for a DP operation is shown. The process starts at 303, where a decision mean change in weather is made. The limits to determine mean change in weather i.e., wind, current and wave are configurable, and the weather forecast is received 301 and posted 303. In 304, a change in power plant configuration e.g., bus breaker status, gensets status, thruster status, power system mode change etc., is decided. In 305 a change in DP configuration like change in heading, controller gains etc., are checked. A change in operation mode change is detected in 306. If any of the condition in 303, 304, 305 and 306 is satisfied the power plant advisor 307 is initiated. The power plant advisor as described above runs a power plant loop to determine an optimal setup with minimum number of gensets, battery and thrusters based on the selected DP class without exceeding the WSF condition.

The results from 307 is post processed in optimal power plant utilization, where the power loss, efficiency, minimum rest load and power system mode are used to determine the ideal load reference for the producers that results in minimum fuel consumption and emission. The output for 308 is then used in 309 balance profile block where a combined index is computed. In 310, the combined index score is compared with acceptable limits and the results of 308 are then forwarded to control system via connecter 312 if it is approved by 311. If the score exceeds the limit, then the process returns to 309 to continue the same sequence for the next suggestion in the pipeline.

In parallel, as seen in Figure 3, the data distribution service 313 continuously publishes and collects data from the different services hosted in the IT layer. The results from these services are used in 308.

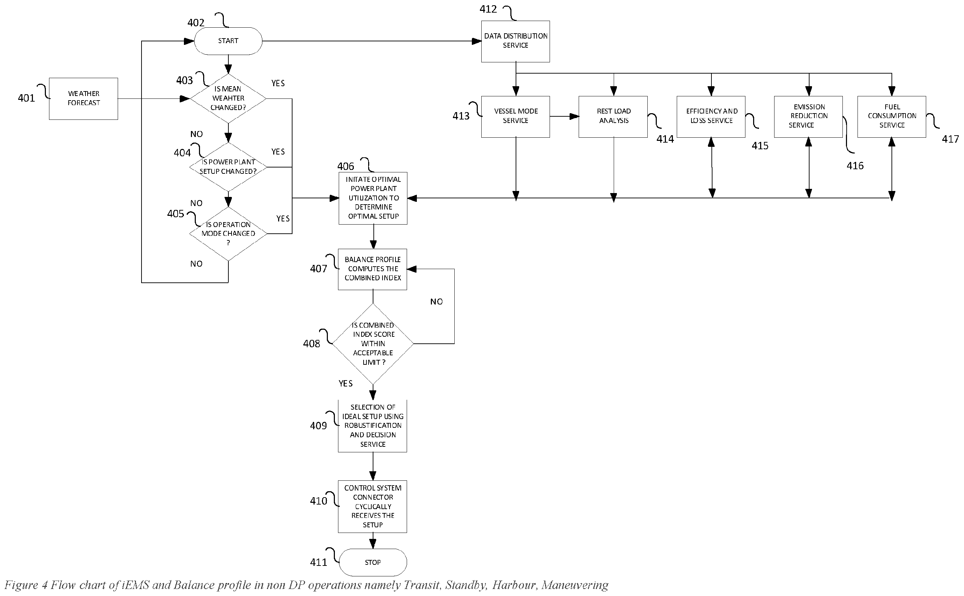

With regard to Figure 4, a flow diagram of an illustrative process of iEMS and balance profile for non-DP operation is shown. The process starts at 403, to detect a change in mean weather based on the weather forecast received 401. In addition, a change in power plant setup including the power system mode change 404 or operational mode change 405 are used to initiate the optimal power plant utilization service. The different power system modes for different vessel operation mode are defined in a configuration file. An optimizer using the mean load profile, peak load demands performs iteration on the defined modes to determine a best setup that provides minimum energy usage. The selected configuration shall also provide the required efficiency.

In 408, the combined index from the balance profile block 407 is compared against the limits to determine if the recommendations can be forwarded to the control system via 409 and 410. Any deviation for the acceptable limit will result in aborting the sequence of transferring the advice to control system. The flow goes back to 407 to repeat the procedure based on the next advice in the queue. As mentioned before, the other services hosted in IT layer perform the calculation based on the real time measurements received via the data distribution service 412.

The present invention relates to a hierarchy is based on the industry approved ANSI/ISA -95 model. The physical components are placed in level 0 in the model, where process happens in milliseconds or microseconds. The measurements from level 0 are transmitted to controllers in level 1, where the actions happen in seconds. The level 2 hosts the monitoring and controlling elements are performed within in seconds. EMS is located in level 3 where PMS operation and selection of operation modes are performed. The iEMS including balance profile are placed in level between 3 and 4 i.e., 3.5. The novel control system connector links level 3.5 and 3. Level 5 is where the business planning and logistics are performed. This level has no relevance to the mechanism defined in this patent.

To summarize the present invention relates to a system and related method for controlling a marine vessel comprising a number of devices. The devices including a number of power generators and consumers, further comprising sensors for monitoring the activity of the devices. The system also includes at least one processor calculating device score values representing the performance of the devices based on the sensor measurements and know characteristics of each device. Also, the system includes a control unit connected to said devices and being configured to calculate an efficiency score value based on said device score values, the efficiency score value defining the efficiency of the system.

The system is also configured to calculate the redundancy of the system based on the operation mode and/or load of the devices, and to calculate a redundancy margin index indicating the redundancy of the system devices according to predetermined scores for each operation mode related to the redundancy of the related device, and computing the efficiency and redundancy score values for the system. The system also further configured to calculate a combined index based on the efficiency score value and redundancy margin index.

The system includes a set of setup configurations for the devices included in the system, and is configured to, at the instance of the combined index being outside a predetermined range, calculating the combined index for at least one alternate device setup and indicating the preferred setup based on a comparison between the combined index values. By choosing the highest combined index value the optimal mode of operation of the system may be used.

The predetermined scores for each operation mode may be based on statistical analysis of previous stored data from corresponding situations or the predetermined scores and/or the predetermined range may be obtained from a machine learning unit analysing the system performance. The scores and range preferably being obtained from the machine learning unit are based on an analysis of previous data sampled in previous cases and/or feedback registered from system operators.

The comparison of the combined indexes may also include a comparison of said computed or calculated scores, indexes and alternative device setups provided by a machine learning unit for optimization the system efficiency and redundancy based on an individual evaluation of the devices in addition to the efficiency and redundancy score values.

The sensors in the system may also include one or more sensors for monitoring the vessel environment such as waves, current, wind and/or for monitoring of the vessel behavior, such as the position, motion, speed, heading of the vessel, the system thus being capable of weighting the scores depending on the situation, e.g. giving redundancy priority under difficult weather conditions. For the same purpose the system may also be configured to receive information regarding the vessel environment directly, such as a weather forecast, and being configured to take the environment information into account by a vessel response simulator, providing input to the system related to future conditions in the environment.

The devices in the system may be defined as individual entities in the system, or may be grouped in clusters, such as a cluster for power generation, a cluster for thrusters, whereby the system calculates a common device score for each of the clusters.

The system may also include a user interface including a display and interface such as a keyboard for allowing an operator to choose a setup based on said combined indexes, where the combined index is visualized for the operator to simplify the choice options, or for providing feedback from the user evaluating the performance. The choices and feedback may be registered by the system and used to optimize future automatic choices or the calculation of future scores and indexes, e.g. by a machine learning algorithm.

## Claims

1. System for controlling a marine vessel comprising a number of devices, the devices including a number of power generators and consumers, further comprising sensors for monitoring the activity of the devices, the system including at least one processor calculating device score values of the devices, the system also including a control unit connected to said devices and being configured to calculate an efficiency score value based on said device score values , the efficiency score value defining the efficiency of the system,
wherein the system also is configured to calculate the redundancy of the system based on the operation mode and/or load of the devices, and to calculate a redundancy margin index indicating the redundancy of the system devices, according to predetermined scores for each operation mode and computing the efficiency and redundancy values,
the system also being configured to calculate a combined index based on the efficiency score value and redundancy margin index, and
the system includes a set of setup configurations for the devices included in the system, the system being configured to, at the instance of the combined index being outside a predetermined range, calculating the combined index for at least one alternate device setup and indicating the preferred setup based on a comparison between the combined index values.

2. System according to claim 1, wherein the predetermined scores for each operation mode is based on statistical analysis of previous stored data from corresponding situations.

3. System according to any of the previous claims wherein the predetermined scores and/or the predetermined range are obtained from a machine learning unit|.

4. System according to claim 3, wherein said scores and range obtained from the machine learning unit are based on an analysis of previous data sampled in previous cases and/or feedback registered from system operators.

5. System according to any of the previous claims, wherein the comparison of the combined indexes also includes a comparison of said computed or calculated scores, indexes and alternative device setups provided by a machine learning unit for optimization the system efficiency and redundancy.

6. System according to any of the previous claims, said sensors further comprising one or more sensors for monitoring the vessel environment such as waves, current, wind and/or for monitoring of the vessel behavior, such as the position, motion, speed, heading of the vessel.

7. System according to any of the previous claims, wherein said system is also configured to receive information regarding the vessel environment, such as a weather forecast, and being configured to take the environment information into account by a vessel response simulator, providing input to the system related to future conditions in the environment.

8. System according to any of the previous claims, wherein the devices are grouped in clusters, such as a cluster for power generation, a cluster for thrusters, whereby the system calculates a common device score for each of the clusters.

9. System according to any of the previous claims, wherein the system includes a user interface including a display for allowing an operator to choose a setup based on said combined indexes.

## Patentansprüche

1. System zum Steuern eines Seeschiffs, umfassend eine Anzahl von Vorrichtungen, wobei die Vorrichtungen eine Anzahl von Leistungserzeugern und -verbrauchern einschließen, ferner umfassend Sensoren zum Überwachen der Aktivität der Vorrichtungen, wobei das System mindestens einen Prozessor einschließt, der Vorrichtungsbewertungswerte der Vorrichtungen berechnet, wobei das System ebenso eine Steuereinheit einschließt, die mit den Vorrichtungen verbunden und konfiguriert ist, um einen Effizienzbewertungswert basierend auf den Vorrichtungsbewertungswerten zu berechnen, wobei der Effizienzbewertungswert die Effizienz des Systems definiert,
wobei das System ebenso konfiguriert ist, um die Redundanz des Systems basierend auf dem Betriebsmodus und/oder der Belastung der Vorrichtungen zu berechnen und einen Redundanzmargenindex zu berechnen, der die Redundanz der Systemvorrichtungen angibt, gemäß vorherbestimmter Bewertungen für jeden Betriebsmodus und Berechnen der Effizienz- und Redundanzwerte,
wobei das System ebenso konfiguriert ist, um einen kombinierten Index basierend auf dem Effizienzbewertungswert und dem Redundanzmargenindex zu berechnen, und
das System einen Satz von Setup-Konfigurationen für die Vorrichtungen einschließt, die in dem System eingeschlossen sind, wobei das System konfiguriert ist, um, in dem Fall, dass der kombinierte Index außerhalb eines vorherbestimmten Bereichs liegt, den kombinierten Index für mindestens ein wechselndes Vorrichtungs-Setup zu berechnen und das bevorzugte Setup basierend auf einem Vergleich zwischen den kombinierten Indexwerten anzugeben.

2. System nach Anspruch 1, wobei die vorherbestimmten Bewertungen für jeden Betriebsmodus auf einer statistischen Analyse früher gespeicherter Daten aus entsprechenden Situationen basieren.

3. System nach einem der vorstehenden Ansprüche, wobei die vorherbestimmten Bewertungen und/oder der vorherbestimmte Bereich von einer Einheit für maschinelles Lernen erhalten werden.

4. System nach Anspruch 3, wobei die Bewertungen und Bereiche, die von der Einheit für maschinelles Lernen erhalten werden, auf einer Analyse von früheren Daten, die in früheren Fällen gesammelt wurden und/oder auf Feedback, das von Systembetreibern registriert wird, basieren.

5. System nach einem der vorstehenden Ansprüche, wobei der Vergleich der kombinierten Indizes ebenso einen Vergleich der kalkulierten oder berechneten Bewertungen, Indizes und alternativen Vorrichtungs-Setups einschließt, die durch einer Einheit für maschinelles Lernen für die Optimierung der Systemeffizienz und -redundanz bereitgestellt werden.

6. System nach einem der vorstehenden Ansprüche, die Sensoren ferner umfassend einen oder mehrere Sensoren zum Überwachen der Schiffsumgebung, wie Wellen, Strömung, Wind, und/oder zum Überwachen des Schiffsverhaltens, wie Position, Bewegung, Geschwindigkeit, Kurs des Schiffs.

7. System nach einem der vorstehenden Ansprüche, wobei das System ferner konfiguriert ist, um Informationen über die Schiffsumgebung, wie eine Wettervorhersage, zu empfangen, und konfiguriert ist, um die Umgebungsinformationen durch einen Schiffsreaktionssimulator zu berücksichtigen, der dem System Eingaben bezüglich zukünftiger Bedingungen in der Umgebung bereitstellt.

8. System nach einem der vorstehenden Ansprüche, wobei die Vorrichtungen in Clustern gruppiert sind, wie etwa ein Cluster für eine Leistungserzeugung, ein Cluster für Triebwerke, wobei das System eine gemeinsame Vorrichtungsbewertung für jedes der Cluster berechnet.

9. System nach einem der vorstehenden Ansprüche, wobei das System eine Benutzerschnittstelle einschließt, einschließlich einer Anzeige, die es einem Bediener ermöglicht, ein Setup basierend auf den kombinierten Indizes auszuwählen.

## Revendications

1. Système de commande d'un navire marin comprenant un certain nombre de dispositifs, les dispositifs comportant un nombre de générateurs d'énergie et de consommateurs, comprenant en outre des capteurs pour surveiller l'activité des dispositifs, le système comportant au moins un processeur calculant les valeurs de score des dispositifs, le système comportant également une unité de commande connectée auxdits dispositifs et configurée pour calculer une valeur de score d'efficacité sur la base des valeurs de score des dispositifs, la valeur de score d'efficacité définissant l'efficacité du système,
dans lequel le système est également configuré pour calculer la redondance du système sur la base du mode de fonctionnement et/ou de la charge des dispositifs, et pour calculer un indice de marge de redondance indiquant la redondance des dispositifs du système, selon les scores prédéterminés pour chaque mode de fonctionnement et en calculant les valeurs d'efficacité et de redondance,
le système est également configuré pour calculer un indice combiné sur la base de la valeur de score d'efficacité et l'indice de marge de redondance, et
le système comporte un ensemble de configurations d'installation pour les dispositifs inclus dans le système, le système étant configuré pour, lorsque l'indice combiné se situe en dehors d'une plage prédéterminée, calculer l'indice combiné pour au moins une installation alternative du dispositif et indiquer l'installation préférée sur la base d'une comparaison entre les valeurs de l'indice combiné.

2. Système selon la revendication 1, dans lequel les scores prédéterminés pour chaque mode de fonctionnement sont basés sur une analyse statistique des données stockées précédemment dans des situations correspondantes.

3. Système selon l'une quelconque des revendications précédentes, dans lequel les scores prédéterminés et/ou la plage prédéterminée sont obtenus à partir d'une unité d'apprentissage automatique.

4. Système selon la revendication 3, dans lequel les scores et la plage obtenus par l'unité d'apprentissage automatique sont basés sur une analyse de données antérieures échantillonnées dans des cas précédents et/ou sur le retour d'informations enregistrées par les opérateurs du système.

5. Système selon l'une quelconque des revendications précédentes, dans lequel la comparaison des indices combinés comporte également une comparaison des scores calculés, des indices et des configurations de dispositifs alternatifs fournis par une unité d'apprentissage automatique pour optimiser l'efficacité et la redondance du système.

6. Système selon l'une quelconque des revendications précédentes, lesdits capteurs comprenant en outre un ou plusieurs capteurs pour la surveillance de l'environnement du navire, comme les vagues, le courant, le vent et/ou pour la surveillance du comportement du navire, comme la position, le mouvement, la vitesse, le cap du navire.

7. Système selon l'une quelconque des revendications précédentes, dans lequel ledit système est également configuré pour recevoir des informations concernant l'environnement du navire, telles que des prévisions météorologiques, et est configuré pour prendre en compte les informations relatives à l'environnement par le biais d'un simulateur de réaction du navire, en fournissant au système des informations relatives aux conditions futures de l'environnement.

8. Système selon l'une quelconque des revendications précédentes, dans lequel les dispositifs sont regroupés en grappes, par exemple une grappe pour la production d'énergie, une grappe pour les propulseurs, le système calculant un score commun pour chaque grappe.

9. Système selon l'une quelconque des revendications précédentes, dans lequel le système comporte une interface utilisateur dotée d'un écran permettant à un opérateur de choisir une configuration sur la base de ces indices combinés.
